(19) **Europäisches Patentamt / European Patent Office / Office européen des brevets**

(11) **EP 2 415 596 A1**

(12) **EUROPEAN PATENT APPLICATION**
published in accordance with Art. 153(4) EPC

(43) Date of publication:
08.02.2012 Bulletin 2012/06

(21) Application number: 10758380.9

(22) Date of filing: 09.03.2010

(51) Int Cl.:
$B32B\ 27/00^{(2006.01)}$   $C09J\ 7/02^{(2006.01)}$

(86) International application number:
PCT/JP2010/053891

(87) International publication number:
WO 2010/113604 (07.10.2010 Gazette 2010/40)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 31.03.2009 JP 2009084615

(71) Applicant: Kimoto Co., Ltd.
Shinjuku-ku
Tokyo 160-0022 (JP)

(72) Inventors:
• HASEGAWA, Takeshi
Saitama-shi
Saitama 338-0013 (JP)

• NEGISHI, Satoshi
Saitama-shi
Saitama 338-0013 (JP)
• KURISHIMA, Susumu
Saitama-shi
Saitama 338-0013 (JP)

(74) Representative: Strehl Schübel-Hopf & Partner
Maximilianstrasse 54
80538 München (DE)

(54) **FUNCTIONAL FILM AND LAMINATE**

(57)    A functional film that does not show decrease of surface hardness even when an adhesive layer for adhering it to another member is provided, and does not generate separation nor delamination at the time of die cutting, and a laminate thereof are provided. The functional film is a functional film comprising a plastic film having a functional layer constituted by a cured film on one surface and an adhesive layer on the other surface. The adhesive layer contains a curable adhesive that can be cured by irradiation of ionizing radiation or heating, and is constituted so that the adhesive layer after cured by irradiation of ionizing radiation or heating shows a Martens hardness of 260 N/mm² or lower, and the following relational expression is satisfied.

```
Martens hardness of the adhesive layer after curing ≧ Martens
hardness of the functional layer x 0.25
```

**Description**

Technical Field

The present invention relates to a functional film and a laminate, in particular, a functional film that does not reduce surface hardness of a laminate formed by adhering the functional film to a surface of an adherend via an adhesive layer, and such a laminate.

Background Art

In order to improve surface hardness of a member, a cured layer is provided on a surface of the member. Such a cured layer is provided on a surface of a member by applying a coating solution for cured layer or the like (Patent document 1), or by adhering a film on which a cured layer is formed via an adhesive layer (Patent document 2).

Prior art references

Patent documents

Patent document 1: Japanese Patent Unexamined Publication (Kokai) No. 2009-35703 (Prior Art)
Patent document 2: Japanese Patent Unexamined Publication No. 2008-50590 (Claim 6)

Summary of the Invention

Object to be Achieved by the Invention

However, when a cured layer is directly provided on a surface of a member by applying a coating solution for cured layer to the member and curing it, adhesive property of the cured layer to the surface of the member may poses a problem. Since adhesion is usually influenced by type of material, structure and so forth of the surface of the member, it is difficult to design a coating solution applicable to any members. Therefore, in general, in order to improve adhesion between a member and a cured layer, an adhesion promoting layer and so forth must be also provided.

The method of Patent document 2 for providing a cured layer on a surface of a member by adhering a film on which a cured layer is formed via an adhesive layer is advantageous, since it is a simpler method compared with directly providing a coated film on a member as described above, and a cured layer can be thereby provided on a surface of a member regardless of material, structure and so forth of the member.

However, surface hardness of such a member adhered with a film on which a cured layer is formed is influenced by hardness of the adhesive layer. In particular, when a soft adhesive layer is used, there arises a problem that surface hardness of the member adhered with a film on which a cured layer is formed becomes lower than the surface hardness of the cured layer itself.

Therefore, an object of the present invention is to provide a functional film of which surface hardness is not reduced even when an adhesive layer for adhering it to another member is provided, and a laminate thereof.

Means for Achieving the Object

As a result of various researches for achieving the aforementioned object, it was found that if an adhesion layer before curing was designed so that surface hardness of a functional layer constituted by a cured film and surface hardness of the adhesive layer after curing satisfy a particular relationship, reduction of the surface hardness of the functional layer could be prevented.

In addition, it was also found that when a film on which a cured layer was formed was adhered to a surface of a member via a hard adhesive layer, and then the adhered member is cut into a predetermined shape by die cutting, separation or delamination between the film and the adhesion layer could be prevented at the time of die cutting, and the present invention was accomplished.

That is, the functional film of the present invention is a functional film comprising a plastic film having a functional layer constituted by a cured film on one surface and an adhesive layer on the other surface, wherein:

the adhesive layer contains a curable adhesive that can be cured by irradiation of ionizing radiation or heating, and
the adhesive layer is constituted so that the adhesive layer after cured by irradiation of ionizing radiation or heating shows a Martens hardness of 260 N/mm$^2$ or lower, and the relational expression: Martens hardness of the adhesive layer after curing $\geqq$ Martens hardness of the functional layer x 0.25 is satisfied.

The laminate of the present invention is a laminate comprising a plastic film having a functional layer constituted by a cured film on one surface and an adherend adhered to the plastic film via an adhesive layer, wherein:

the adhesive layer contains a curable adhesive that can be cured by irradiation of ionizing radiation or heating, and the adhesive layer is constituted so that the adhesive layer after cured by irradiation of ionizing radiation or heating shows a Martens hardness of 260 N/mm$^2$ or lower, and the relational expression: Martens hardness of the adhesive layer after curing $\geqq$ Martens hardness of the functional layer x 0.25 is satisfied.

The laminate of the present invention is also a laminate formed by adhering an adherend to a plastic film having a functional layer constituted by a cured film on one surface via an adhesive layer, and then curing the adhesive layer, wherein:

the adhesive layer contains a curable adhesive that can be cured by irradiation of ionizing radiation or heating, and the adhesive layer is constituted so that the adhesive layer after cured by irradiation of ionizing radiation or heating shows a Martens hardness of 260 N/mm$_2$ or lower, and the relational expression: Martens hardness of the adhesive layer after curing $\geqq$ Martens hardness of the functional layer x 0.25 is satisfied.

Concerning the functional film and the laminate of the present invention, the simple indication of "adhesive layer" is used to mean the adhesive layer "before completion of curing", which means the adhesive layer before completion of the curing reaction. The state "before completion of curing" includes a state "before start of curing", which means a state before start of the curing reaction (for example, a state that 100% of the curable components of the curable adhesive exist in the adhesive layer), and a state "after start of curing", which means a state after start of the curing reaction and before completion of the curing reaction (for example, a state that less than 100% and not less than about 5% of the curable components of the curable adhesive exist in the adhesive layer). However, a state "after completion of curing", which means a state after completion of the curing reaction (for example, a state that only less than about 5% of the curable components of the curable adhesive exist in the adhesive layer) is excluded.

In the present invention, the term "after curing" is used to mean "after start of curing" and "after completion of curing" mentioned above, and the meaning thereof is not limited to the meaning of "after completion of curing" mentioned above. The term is used with such meanings, because the film is not necessarily subjected to die cutting process immediately after the start of curing, and there is taken into consideration a case where the film is subjected to the process after a certain period of time (for example, about 1 to 3 days after irradiation or heating). In addition, the term "before curing" is used to mean "before start of curing" mentioned above.

Effect of the Invention

The functional film of the present invention can prevent reduction of surface hardness thereof, when it is adhered to an adherend. Moreover, when it is subjected to die cutting, it does not show neither separation nor delamination.
In the laminate of the present invention, reduction of surface hardness of the functional film can be prevented. Moreover, when it is subjected to die cutting, it does not show neither separation nor delamination.

Modes for Carrying out the Invention

Embodiments of the functional film of the present invention will be explained. The functional film of the present invention is a functional film comprising a plastic film having a functional layer constituted by a cured film on one surface and an adhesive layer on the other surface, wherein:

the adhesive layer contains a curable adhesive that can be cured by irradiation of ionizing radiation or heating, and the adhesive layer is constituted so that the adhesive layer after cured by irradiation of ionizing radiation or heating shows a Martens hardness of 260 N/mm$^2$ or lower, and the relational expression: Martens hardness of the adhesive layer after curing $\geqq$ Martens hardness of the functional layer x 0.25 is satisfied.

As the plastic film, films consisting of a synthetic resin such as polyester, ABS (acrylonitrile/butadiene/styrene), polystyrene, polycarbonate, acrylic resin, polyolefin, cellulose resin, polysulfone, polyphenylene sulfide, polyethersulfone, polyetheretherketone, and polyimide can be used. Among these, a polyester film subjected to stretching, especially biaxial stretching, is preferred, because of superior mechanical strength, superior dimensional stability, and high bending strength thereof.

On one surface of the plastic film, the functional layer is provided. The functional layer used in the present invention is a layer consisting of a cured layer formed by curing a resin composition containing a curable resin. As the curable resin, a thermosetting resin or an ionizing radiation curable resin can be used, and an ionizing radiation curable resin is preferred for obtaining higher surface hardness.

Further, the functional layer may have functions of hard coat layer, UV shielding layer, infrared shielding layer, conductive layer, anti-reflection layer, and so forth. In order to impart such functions, various pigments and additives can be added, and it is also possible to use a curable resin having such a function.

On the other side of the plastic film, the adhesive layer is provided. The adhesive layer used in the present invention contains a curable adhesive that can be cured by irradiation of ionizing radiation or heating.

As the curable adhesive that can be cured by irradiation of ionizing radiation, it is preferable to use one consisting of at least a coating material that can cure through crosslinking induced by irradiation of ionizing radiation. As such an ionizing radiation curable coating material, photo cation polymerizable resins that can be polymerized by photo cation polymerization, those formed by mixing one or two or more kinds of photopolymerizable prepolymers or photopolymerizable monomers that can be polymerized by photo radical polymerization, and so forth can be used. Further, various additives can be added to such ionizing radiation curing coating materials, and when ultraviolet radiation is used for the curing, it is preferable to add a photopolymerization initiator, an ultraviolet radiation sensitizing agent, and so forth.

As the curable adhesive that can be cured by heating, a thermosetting resin that can cure through crosslinking induced by heat at a temperature lower than the heat-resistant temperature of the plastic film is preferred, since a coating solution containing the thermosetting resin is applied on the plastic film, and cured by crosslinking induced by heating, and one kind or a mixture of two or more kinds of crosslinkable resins that can cure through crosslinking induced by heating such as those of melamine type, epoxy type, amino alkyd type, urethane type, acrylic type, polyester type and phenol type. In particular, acrylic type thermosetting resins are preferred, which can improve the surface hardness, and show good adhesive property for the plastic film. Although they can be independently used, it is desirable to add a curing agent in order to further improve crosslinking property and hardness of coated film cured through crosslinking.

The curing reaction of such curable adhesives is started by irradiation of ionizing radiation or heating. When a curable adhesive that can be cured by irradiation of ionizing radiation is used, it is preferably adhered to an adherend before the curing reaction is started, and then cured. If it is adhered before the curing, the adhesive layer can be prevented from becoming harder to entrap bubbles at the time of adhesion. When a curable adhesive that can be cured by heating is used, it may be adhered to an adherend before the curing reaction is started, and then cured, as in the case where a curable adhesive that can be cured by irradiation of ionizing radiation is used, but it may also be adhered to an adherend after the curing reaction is started by heating and before the curing reaction is completed, and then the remaining part of the curing reaction may be allowed to advance.

As the curing agent, such compounds as polyisocyanates, amino resins, epoxy resins and carboxylic acids can be appropriately chosen according to compatibility with the resins and used.

The adhesive layer used in the present invention can be constituted by choosing a curable adhesive of which composition of resins, monomers, oligomers etc. is determined so that, first, Martens hardness of the adhesive layer after curing satisfies, together with Martens hardness of the functional layer, the relational expression: Martens hardness of the adhesive layer after curing $\geqq$ Martens hardness of the functional layer x 0.25. The term "after curing" is not used here to mean that the aforementioned relationship must be necessarily satisfied in all the states observed after start of curing or after completion of curing, but means that it is sufficient that the aforementioned relationship is satisfied at least after completion of curing. Therefore, not only a case where the aforementioned relationship is not satisfied from start of curing to immediately before completion of curing, but it is satisfied after curing, but also a case where the aforementioned relationship is satisfied in all the states observed after start of curing or after completion of curing corresponds to the definition used in the present invention that the adhesive layer "after curing" satisfies the aforementioned relationship.

In the present invention, the composition of the adhesive layer before curing is adjusted so that Martens hardness of the adhesive layer after curing corresponds to 25% or more, preferably 30% or more, of Martens hardness of the functional layer. If the composition of the adhesive layer before curing is adjusted so that Martens hardness of the adhesive layer after curing corresponds to 25% or more of the Martens hardness of the functional layer, surface hardness of the functional layer is not reduced.

The Martens hardness represents the hardness (difficulty of denting) of the adhesive layer, which is calculated from a test load and dented area observed when the surface of the adhesive layer is pushed with a Vickers indenting tool, and serves as an index of the hardness of the adhesive layer.

The adhesive layer used in the present invention can be constituted by a curable adhesive of which composition of resins, monomers, oligomers etc. is adjusted so that, second, Martens hardness of the adhesive layer after curing is 260 N/mm2 or lower. The term "after curing" is not used here to mean that the Martens hardness of the adhesive layer must necessarily be the aforementioned value or lower in all the states observed after start of curing or after completion of curing, but means that it is sufficient that the Martens hardness of the adhesive layer is the aforementioned value or smaller at least during a period of from start of curing to immediately before completion of curing. Therefore, not only a case where the Martens hardness of the adhesive layer is not the aforementioned value or smaller after completion of curing, but the Martens hardness of the adhesive layer is the aforementioned value or lower during a period of from start of curing to immediately before completion of curing, but also a case where in all the states observed after start of curing or after completion of curing, the Martens hardness of the adhesive layer is the aforementioned value or lower corresponds to the definition of the present invention that the Martens hardness of the adhesive layer "after curing" shows a Martens hardness of the aforementioned value or lower.

In the present invention, the Martens hardness of the adhesive layer after curing is represented with values measured by the method defined in ISO-14577-1 with a super-microhardness tester (trade name: Fischer Scope HM2000, Fischer Instruments Corporation) in an atmosphere of a temperature of 20°C and a relative humidity of 60%.

In the present invention, the curable adhesive is constituted so that the adhesive layer after curing shows a Martens hardness of 260 N/mm$^2$ or lower, preferably 200 N/mm$^2$ or lower. If the curable adhesive is constituted so that the adhesive layer after curing shows a Martens hardness of 260 N/mm$^2$ or lower, generation of separation or delamination at the time of die cutting can be prevented.

It is considered that if the curable adhesive is constituted so that the adhesive layer after curing shows a the Martens hardness of 260 N/mm$^2$ or lower, generation of separation or delamination between the plastic film and the adhesive layer can be prevented at the time of die cutting as described above, because if the Martens hardness is higher than 260 N/mm$^2$, a strong force is required to cut the plastic film with a blade, thus repelling force of the plastic film becomes unduly large, and therefore separation or delamination is generated between the plastic film and the adhesive layer.

If the Martens hardness is unduly high, the laminate may be curled by shrinkage of the curable adhesive at the time of curing, or partial unevenness is generated in a film or molded article on which the cured layer was formed to degrade flatness, and therefore it is preferred that the Martens hardness is not unduly high.

The Martens hardness of the adhesive layer after curing can be controlled by adjusting composition of the monomers and oligomers constituting the resin used for the adhesive layer before curing, or composition of the resin used for the adhesive layer before curing. Further, it can also be controlled by adding a thermoplastic resin, besides the curable adhesive. In order to increase the Martens hardness of the adhesive layer after curing, for example, crosslinking density of the adhesive layer after curing may be increased, or monomer components used for dilution may be changed to those of which homopolymer shows a higher glass transition temperature. In order to increase the crosslinking density, tetra- to hexa-functional monomers giving high crosslinking density (for example, A-DPH (Shin Nakamura Chemical Co., Ltd.) and A-TMMT (Shin Nakamura Chemical Co., Ltd.)) or the like may be added. In order to elevate the glass transition temperature, acrylic acid, acrylamide, or the like may be added.

Thickness of the adhesive layer is preferably 1 to 50 μm. As for the lower limit of the thickness, the adhesive layer preferably has a thickness of 2 μm or larger, more preferably 5 μm or larger, particularly preferably 10 μm or larger, and as for the upper limit of the thickness, the adhesive layer preferably has a thickness of 40 μm or smaller, more preferably 30 μm or smaller. The thickness is defined to be 1 μm or larger in order to obtain satisfactory adhesive property with an adherend, and 50 μm or smaller in order to lessen influence of hardness of the adhesive layer on the functional layer. Further, as the thickness of the adhesive layer becomes larger, exposure dose of the ionizing radiation on the plastic film increases, and thus the plastic film may be deteriorated. The exposure dose of the ionizing radiation is preferably 500 to 1500 mJ/cm$^2$.

Such a functional film as described above is adhered to an adherend via an adhesive layer, and can prevent decrease of the surface hardness of the functional layer of the laminate.

Hereafter, embodiments of the laminate of the present invention will be explained.

The laminate of the present invention is a laminate comprising a plastic film having a functional layer constituted by a cured film on one surface and an adherend adhered to the plastic film via an adhesive layer, wherein the adhesive layer contains a curable adhesive that can be cured by irradiation of ionizing radiation or heating, and the adhesive layer is constituted so that the adhesive layer after cured by irradiation of ionizing radiation or heating shows a Martens hardness of 260 N/mm$^2$ or lower, and the relational expression: Martens hardness of the adhesive layer after curing $\geqq$ Martens hardness of the functional layer x 0.25 is satisfied.

Further, the laminate of the present invention is also a laminate formed by adhering an adherend to a plastic film having a functional layer constituted by a cured film on one surface via an adhesive layer, and then curing the adhesive layer, wherein the adhesive layer contains a curable adhesive that can be cured by irradiation of ionizing radiation or heating, and the adhesive layer is constituted so that the adhesive layer after cured by irradiation of ionizing radiation or heating shows a Martens hardness of 260 N/mm$^2$ or lower, and the relational expression: Martens hardness of the adhesive layer after curing $\geqq$ Martens hardness of the functional layer x 0.25 is satisfied.

As the adherend on which such a functional layer is laminated, there can be used molded articles consisting of a synthetic resin such as polyester, ABS (acrylonitrile/butadiene/styrene), polystyrene, polycarbonate, acrylic resin, polyolefin, cellulose resin, polysulfone, polyphenylene sulfide, polyethersulfone, polyetheretherketone, and polyimide can be used, and those of various shapes can be used. Among these, those in the form of a film or sheet showing superior flatness are preferably used, and a polyester film subjected to stretching, especially biaxial stretching, is preferred, because of superior mechanical strength, superior dimensional stability, and high bending strength thereof.

As the plastic film having a functional layer, those similar to the aforementioned functional film can be used. Further, as the adhesive layer, those explained for the aforementioned functional film can be used.

The adhesive layer may be provided on the plastic film having a functional layer on the side not having the functional layer, or may be directly provided on an adherend on which the plastic film having a functional layer is to be provided. Further, the adhesive layer may be provided by filling a material of the adhesive layer between the plastic film having a functional layer and the adherend.

In such a laminate formed by laminating the plastic film having a functional layer on an adherend via an adhesive layer, hardness of the functional layer of the laminate is not influenced by the adhesive layer, and decrease thereof can be prevented.

The adhesive layer or the functional layer may contain additives such as leveling agents, ultraviolet absorbers and anti-oxidants.

Examples of the method for forming the adhesive layer or the functional layer include a method of preparing a coating solution by dissolving or dispersing components of each layer in an appropriate solvent, or mixing the components of each layer without using any solvent, applying the coating solution on the plastic film by a known method such as roll coating, bar coating, spray coating and air knife coating, and performing heating or irradiation of ionizing radiation. It is also possible to cast the prepared solution, not to use it as a coating solution, to form the adhesive layer.

Examples

Hereafter, the present invention will be further explained with reference to examples. The term and symbol "part" and "%" are used on weight basis, unless specifically indicated.

[Example 1]

On one surface of a plastic film having a thickness of 75 $\mu$m (COSMOSHINE A4300, Toyobo Co., Ltd.), the following hard coat coating material was applied by bar coating, dried, and then irradiated with ultraviolet radiation by using a high pressure mercury vapor lamp (exposure dose: 300 mJ/cm$^2$) to form a hard coat film of Example 1 having a thickness of 6 $\mu$m and thereby produce a plastic film $\underline{a}$ having a hard coat layer.

<Composition of hard coat coating material>

- Ionizing radiation curable resin composition
  (solid content: 100%, Beamset 575,
  Arakawa Chemical Industries, Ltd.)      10 parts
- Photopolymerization initiator
  (Irgacure 651, Ciba Japan K.K.)      0.5 part
- Propylene glycol monomethyl ether      23 parts

On the surface of the plastic film $\underline{a}$ having the hard coat layer on the side opposite to the hard coat layer side, a coating material for adhesive layer having the following composition was applied in a thickness of 30 $\mu$m, and dried to form an adhesive layer (before curing). Then, a plastic film having a thickness of 188 $\mu$m (COSMOSHINE A4300, Toyobo Co., Ltd.) as an adherend was faced and adhered to the adhesive layer, and they were irradiated with ultraviolet radiation by using a high pressure mercury vapor lamp (exposure dose: 500 mJ/cm$^2$) to completely cure the adhesive layer (adhesive layer "after completion of curing", the same shall apply to the following descriptions) and thereby produce a laminate A of Example 1.

<Composition of coating material for adhesive layer>

- Ionizing radiation curable resin
  (solid content: 100%, KAYARAD R-115,

Nippon Kayaku Co., Ltd.)      60 parts
- 2-Hydroxyethyl methacrylate      40 parts
- Photopolymerization initiator
  (Irgacure 184, Ciba Japan K.K.)      5 parts

[Example 2]

A laminate B of Example 2 was produced in the same manner as that of Example 1 except that the coating material for adhesive layer of Example 1 was changed to the following coating material for adhesive layer.

<Composition of coating material for adhesive layer>

- Ionizing radiation curable resin
  (solid content: 100%, KAYARAD R-115,
  Nippon Kayaku Co., Ltd.)      20 parts
- Ionizing radiation curable resin
  (solid content: 100%, NK Oligo U-200PA,
  Shin-Nakamura Chemical Co., Ltd.)      40 parts
- 2-Hydroxyethyl methacrylate      40 parts
- Photopolymerization initiator
  (Irgacure 184, Ciba Japan K.K.)      5 parts

[Example 3]

On one surface of a plastic film having a thickness of 75 $\mu$m (COSMOSHINE A4300, Toyobo Co., Ltd.), the following hard coat coating material was applied by bar coating, dried, and then irradiated with ultraviolet radiation by using a high pressure mercury vapor lamp (exposure dose: 300 mJ/cm$^2$) to form a hard coat film of Example 3 having a thickness of 3 $\mu$m and thereby produce a plastic film <u>b</u> having a hard coat layer.

<Composition of hard coat coating material>

- $\varepsilon$-Caprolactone-modified tris-(2-hydroxyethyl)isocyanurate
  (solid content: 100%, SR368,
  Sartomer Japan Inc.)      5 parts
- Ionizing radiation curable resin composition
  (solid content: 100%, Beamset 575,
  Arakawa Chemical Industries, Ltd.)      10 parts
- Photopolymerization initiator
  (Irgacure 651, Ciba Japan K.K.) 0.4 part
- Propylene glycol monomethyl ether      30 parts

On the surface of the plastic film <u>b</u> having the hard coat layer on the side opposite to the hard coat layer side, a coating material for adhesive layer having the following composition was applied in a thickness of 30 $\mu$m, and dried to form an adhesive layer (before curing). Then, a plastic film having a thickness of 188 $\mu$m (COSMOSHINE A4300, Toyobo Co., Ltd.) as an adherend was faced and adhered to the adhesive layer, and they were irradiated with ultraviolet radiation by using a high pressure mercury vapor lamp (exposure dose: 500 mJ/cm$^2$) to completely cure the adhesive layer and thereby produce a laminate C of Example 3.

<Composition of coating material for adhesive layer>

- Ionizing radiation curable resin

(solid content: 100%, KAYARAD R-115,
Nippon Kayaku Co., Ltd.)        60 parts
- 2-Hydroxyethyl methacrylate        40 parts
- Photopolymerization initiator
(Irgacure 184, Ciba Japan K.K.)        5 parts

[Example 4]

A laminate D of Example 4 was produced in the same manner as that of Example 3 except that the coating material for adhesive layer of Example 3 was changed to the following coating material for adhesive layer.

<Composition of coating material for adhesive layer>

- Ionizing radiation curable resin
(solid content: 100%, KAYARAD R-115,
Nippon Kayaku Co., Ltd.)        30 parts
- Ionizing radiation curable resin
(solid content: 100%, NK Oligo U-200PA,
Shin-Nakamura Chemical Co., Ltd.)        30 parts
- 2-Hydroxyethyl methacrylate        40 parts
- Photopolymerization initiator
(Irgacure 184, Ciba Japan K.K.)        5 parts

[Comparative Example 1]

A laminate E of Comparative Example 1 was produced in the same manner as that of Example 1 except that the coating material for adhesive layer of Example 1 was changed to the following coating material for adhesive layer.

<Composition of coating material for adhesive layer>

- Ionizing radiation curable resin
(solid content: 100%, NK Oligo U-200PA,
Shin-Nakamura Chemical Co., Ltd.)        52.5 parts
- 2-Hydroxyethyl methacrylate        40 parts
- Butyl acrylate        7.5 parts
- Photopolymerization initiator
(Irgacure 184, Ciba Japan K.K.)        5 parts

[Comparative Example 2]

A laminate F of Comparative Example 2 was produced in the same manner as that of Example 1 except that the coating material for adhesive layer of Example 1 was changed to the following coating material for adhesive layer.

<Composition of coating material for adhesive layer>

- Ionizing radiation curable resin
(solid content: 100%, NK Ester A-TMM-3N,
Shin-Nakamura Chemical Co., Ltd.)        100 parts
- Photopolymerization initiator
(Irgacure 184, Ciba Japan K.K.)        5 parts

[Comparative Example 3]

On one surface of a plastic film having a thickness of 50 $\mu$m (COSMOSHINE A4300, Toyobo Co., Ltd.), the following hard coat coating material was applied by bar coating, dried, and then irradiated with ultraviolet radiation by using a high pressure mercury vapor lamp (exposure dose: 300 mJ/cm$^2$) to form a hard coat film of Comparative Example 3 having a thickness of 6 um and thereby produce a plastic film c having a hard coat layer.

<Composition of hard coat coating material>

- Ionizing radiation curable resin composition
  (solid content: 80%, UNIDIC 17-806,
  DIC Corporation)        20 parts
- Dilution solvent        34 parts
- Photopolymerization initiator
  (Irgacure 184, Ciba Japan K.K.)        0.8 part

On the surface of the plastic film c having the hard coat layer on the side opposite to the hard coat layer side, a coating material for adhesive layer having the following composition was applied in a thickness of 30 $\mu$m, and dried to form an adhesive layer (before curing). Then, a plastic film having a thickness of 188 $\mu$m (COSMOSHINE A4300, Toyobo Co.,
Ltd.) as an adherend was faced and adhered to the adhesive layer, and they were irradiated with ultraviolet radiation by using a high pressure mercury vapor lamp (exposure dose: 500 mJ/cm$^2$) to completely cure the adhesive layer and thereby produce a laminate G of Comparative Example 3.

<Composition of coating material for adhesive layer>

- Ionizing radiation curable resin
  (solid content: 80%, U-6HA,
  Shin-Nakamura Chemical Co., Ltd.)        20 parts
- Dilution solvent        20 parts
- Photopolymerization initiator
  (Irgacure 184, Ciba Japan K.K.)        5 parts

[Comparative Example 4]

A laminate H of Comparative Example 4 was produced in the same manner as that of Comparative Example 3 except that the plastic film of Comparative Example 3 having a thickness of 50 $\mu$m (COSMOSHINE A4300, Toyobo Co., Ltd.) was changed to a plastic film having a thickness of 75 $\mu$m (COSMOSHINE A4300, Toyobo Co., Ltd.).

[Comparative Example 5]

A laminate I of Comparative Example 5 was produced in the same manner as that of Comparative Example 3 except that the plastic film of Comparative Example 3 having a thickness of 50 $\mu$m (COSMOSHINE A4300, Toyobo Co., Ltd.) was changed to a plastic film having a thickness of 250 $\mu$m (COSMOSHINE A4300, Toyobo Co., Ltd.).
The obtained laminates of Examples 1 to 4 and Comparative Examples 1 to 5 were evaluated for the following items.

[Measurement of Martens hardness]

On a transparent polyester film having a thickness of 188 $\mu$m (COSMOSHINE A4300, Toyobo Co., Ltd.), each of the coating solutions for adhesive layer of Examples 1 to 4 and Comparative Examples 1 to 5 was applied in a thickness of 30 $\mu$m, and dried to form an adhesive layer (before curing). A mold releasing film was adhered to the adhesive layer, and they were subjected to ultraviolet irradiation to cure the adhesive layer. Then, 24 hours after the ultraviolet irradiation, the mold releasing film was delaminated from the adhesive layer. The adhesive layer from which the mold releasing film was delaminated is an adhesive layer "after completion of curing". Then, Martens hardness of the surface of the adhesive layer after curing was measured by the method defined in ISO-14577-1 (Table 1, "Martens hardness of adhesive layer"). The measurement was performed with a super-microhardness tester (trade name: Fischer Scope HM2000, Fischer Instruments Corporation) in an atmosphere of a temperature of 20˚C and a relative humidity of 60%. The maximum test load was 1 mN. The results are shown in Table 1.

Further, Martens hardness of the surfaces of the hard coat layers of the laminate A to I of Examples 1 to 4 and Comparative Examples 1 to 5, and the hard coat layers of the plastic films a to c having a hard coat layer was measured in the same manner as that of the measurement of the Martens hardness of the surfaces of the adhesive layers after curing described above (hardness of the former corresponds to "Martens hardness of hard coat layer of laminate" in Table 1, and hardness of the latter corresponds to "Martens hardness of film having hard coat layer" in Table 1). The results are shown in Table 1.

[Evaluation based on Martens hardness]

When the Martens hardness of the hard coat layer of the laminate was lower than 92% of the Martens hardness of the plastic film having a hard coat layer, the result was indicated with the symbol "×", when not lower than 92% and lower than 96%, the result was indicated with the symbol "○", and when not lower than 96%, the result was indicated with the symbol "◎". The results are shown in Table 1.

[Evaluation based on pencil hardness]

Pencil hardness of the surfaces of the hard coat layers of the laminate A to I of Examples 1 to 4 and Comparative Examples 1 to 5 and the hard coat layers of the plastic films a to c having a hard coat layer was measured according to JIS K5600-5-4:1999. When the pencil hardness of the hard coat layer of the laminate decreased to become lower than the pencil hardness of the plastic film having a hard coat layer, the result was indicated with the symbol "×", and when the pencil hardness of the hard coat layer of the laminate did not decrease, the result was indicated with the symbol "○". The results are shown in Table 1.

[Suitability for die cutting(punching)]

The laminates A to I of Examples 1 to 4 and Comparative Examples 1 to 5 were subjected to die cutting using a die cutting machine to prepare 5 pieces of samples for each laminate. The die cutting was performed for the laminate A to I left for 24 hours after the ultraviolet irradiation of the adhesive layers before curing. When separation or delamination was generated in all of the 5 sample pieces at the time of die cutting, the result was indicated with the symbol "X", when separation or delamination was generated in 1 to 4 sample pieces among the 5 sample pieces, the result was indicated with the symbol "△", and when separation or delamination was not generated in all of the 5 sample pieces, the result was indicated with the symbol "O". The results are shown in Table 1.
[Table 1]

| | Martens hardness of hard coat layer of laminate | Martens hardness of film having hard coat layer | Martens hardness of adhesive layer | Evaluation based on Martens hardness | Evaluation based on pencil hardness | Suitability for die cutting |
|---|---|---|---|---|---|---|
| Example 1 | 222 | 229 | 259 | ◎ | ○ | ○ |
| Example 2 | 218 | 229 | 60 | ○ | ○ | ○ |
| Example 3 | 196 | 203 | 259 | ◎ | ○ | ○ |
| Example 4 | 195 | 203 | 62 | ◎ | ○ | ○ |
| Comparative Example 1 | 205 | 229 | 8 | × | × | ○ |
| Comparative Example 2 | 225 | 229 | 397 | ◎ | ○ | × |
| Comparative Example 3 | 4.36 | 450 | 287 | ◎ | ○ | △ |

(continued)

|  | Martens hardness of hard coat layer of laminate | Martens hardness of film having hard coat layer | Martens hardness of adhesive layer | Evaluation based on Martens hardness | Evaluation based on pencil hardness | Suitability for die cutting |
|---|---|---|---|---|---|---|
| Comparative Example 4 | 421 | 450 | 287 | ○ | ○ | △ |
| Comparative | 479 | 450 | 287 | ◎ | ○ | △ |

It can be understood as follows from the results shown in Table 1.

In the laminates of Examples 1 to 4, the Martens hardness values of the adhesive layers were higher than 25% of the Martens hardness values of the hard coat layers of the films having a hard coat layer, and therefore decrease of the surface hardness of the hard coat layers of these laminates could be prevented without being influenced by the adhesive layers. Further, since the Martens hardness values of the adhesive layers were lower than 260 $N/mm^2$, they showed good suitability for die cutting and flatness.

In particular, in the laminates of Examples 1, 3 and 4, the Martens hardness values of the adhesive layers were higher than 30% of the Martens hardness of the hard coat layers of the films having a hard coat layer, and therefore they were not influenced by the adhesive layer, and showed good evaluation results not only in the evaluation based on pencil hardness, but also in the evaluation based on the Martens hardness.

In the laminate of Comparative Example 1, the Martens hardness of the adhesive layer was lower than 25% of the Martens hardness of the hard coat layer of the film having a hard coat layer, the laminate of Comparative Example 1 was influenced by the adhesive layer, and could not prevent decrease of the surface hardness of the hard coat layer of the laminate.

In the laminate of Comparative Example 2, the Martens hardness of the adhesive layer was not lower than 25% of the Martens hardness of the hard coat layer of the film having a hard coat layer, but the Martens hardness of the adhesive layer was higher than 260 $N/mm^2$. Therefore, it had a problem concerning suitability for die cutting.

In addition, from the results of Comparative Examples 3 to 5, it was found that neither the Martens hardness of the plastic film c having a hard coat layer, nor the Martens hardness of the hard coat layers of the laminates G to I were influenced by thickness of the substrates.

[Example 5]

A laminate A1 of Example 5 was produced in the same manner as that of Example 1 except that the ultraviolet irradiation dose used for the laminate A of Example 1 was changed to 100 $mJ/cm^2$ so that the adhesive layer was half-cured. The evaluation of suitability for die cutting was performed for the laminate A1 in which the adhesive layer was in a half-cured state in the same manner as described above, and a result similar to that of Example 1 was obtained.

Then, the laminate A1 in which the adhesive layer was in a half-cured state was subjected to die cutting using a die cutting machine in the same manner as described above, and further irradiated with ultraviolet radiation by using a high pressure mercury vapor lamp (exposure dose: 400 $mJ/cm^2$) to completely cure the adhesive layer. When this laminate A1 in which the adhesive layer was completely cured was similarly evaluated for the aforementioned items (except for the suitability for die cutting), superior results were obtained as in Example 1.

From the above results, it could be confirmed that if the Martens hardness of the adhesive layer was adjusted to be a predetermined value, good evaluation results could be obtained for pencil hardness and suitability for die cutting, even if the adhesive layer was in a half-cured state.

**Claims**

1.   A functional film comprising a plastic film having a functional layer constituted by a cured film on one surface and an adhesive layer before completion of curing on the other surface, wherein:

the adhesive layer contains a curable adhesive that can be cured by irradiation of ionizing radiation or heating, and the adhesive layer is constituted so that the adhesive layer after cured by irradiation of ionizing radiation or heating shows a Martens hardness of 260 $N/mm^2$ or lower, and the following relational expression is satisfied.

Martens hardness of the adhesive layer after curing ≧ Martens hardness of the functional layer x 0.25

2. A laminate comprising a plastic film having a functional layer constituted by a cured film on one surface and an adherend adhered to the plastic film via an adhesive layer before completion of curing, wherein:

the adhesive layer contains a curable adhesive that can be cured by irradiation of ionizing radiation or heating, and the adhesive layer is constituted so that the adhesive layer after cured by irradiation of ionizing radiation or heating shows a Martens hardness of 260 N/mm$^2$ or lower, and the following relational expression is satisfied.

Martens hardness of the adhesive layer after curing ≧ Martens hardness of the functional layer x 0.25

3. A laminate comprising a plastic film having a functional layer constituted by a cured film on one surface, an adhesive layer after completion of curing and an adherend laminated on the plastic film in this order, wherein:

the adhesive layer contains a curable adhesive that can be cured by irradiation of ionizing radiation or heating, and the adhesive layer is constituted so that the adhesive layer after cured by irradiation of ionizing radiation or heating shows a Martens hardness of 260 N/mm$^2$ or lower, and the following relational expression is satisfied.

Martens hardness of the adhesive layer after curing ≧ Martens hardness of the functional layer x 0.25

**INTERNATIONAL SEARCH REPORT**

International application No.

PCT/JP2010/053891

### A. CLASSIFICATION OF SUBJECT MATTER

*B32B27/00*(2006.01)i, *C09J7/02*(2006.01)i

According to International Patent Classification (IPC) or to both national classification and IPC

### B. FIELDS SEARCHED

Minimum documentation searched (classification system followed by classification symbols)
B32B1/00-43/00, C09J7/00-7/04

Documentation searched other than minimum documentation to the extent that such documents are included in the fields searched

| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)
WPI

### C. DOCUMENTS CONSIDERED TO BE RELEVANT

| Category* | Citation of document, with indication, where appropriate, of the relevant passages | Relevant to claim No. |
|---|---|---|
| A | WO 2007/080774 A1 (Kimoto Co., Ltd.), 19 July 2007 (19.07.2007), claims & EP 1975683 A1 & US 2009/000728 A1 | 1-3 |
| A | JP 11-077874 A (Kimoto Co., Ltd.), 23 March 1999 (23.03.1999), claims (Family: none) | 1-3 |
| A | JP 11-271506 A (Kimoto Co., Ltd.), 08 October 1999 (08.10.1999), claims (Family: none) | 1-3 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 June, 2010 (10.06.10) | 22 June, 2010 (22.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| | International application No. |
|---|---|
| | PCT/JP2010/053891 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-103169 A  (Mitsubishi Gas Chemical Co., Inc.),<br>20 April 2006 (20.04.2006),<br>claims<br>(Family: none) | 1-3 |
| P,A | WO 2009/122786 A1  (Kimoto Co., Ltd.),<br>08 October 2009 (08.10.2009),<br>claims<br>& JP 2009-241458 A | 1-3 |

Form PCT/ISA/210 (continuation of second sheet) (July 2009)

**REFERENCES CITED IN THE DESCRIPTION**

**Patent documents cited in the description**

- JP 2009035703 A
- JP 2008050590 A